# EUROPÄISCHE PATENTSCHRIFT

(11) **EP 2 490 802 B1**
(45) Veröffentlichungstag und Bekanntmachung des Hinweises auf die Patenterteilung: **18.09.2013**
(21) Anmeldenummer: 11738183.0
(22) Anmeldetag: 07.07.2011
(51) Int. Cl.: C08F 2/22, B01J 19/18, C08F 210/02, C08F 218/08

(54) **TEILKONTINUIERLICHES VERFAHREN ZUR EMULSIONSPOLYMERISATION**
SEMI-CONTINUOUS METHOD FOR EMULSION POLYMERISATION
PROCÉDÉ PARTIELLEMENT CONTINU DE POLYMÉRISATION PAR ÉMULSION

(30) Priorität: 14.07.2010 DE 102010031338
(43) Veröffentlichungstag der Anmeldung: 29.08.2012
(73) Patentinhaber: Wacker Chemie AG, 81737 München (DE)
(72) Erfinder: WEITZEL, Hans-Peter, 84571 Reischach (DE); BRAUNSPERGER, Robert, 84547 Emmerting (DE)
(74) Vertreter: Schuderer, Michael
(86) Internationale Anmeldenummer: PCT/EP2011/061535
(87) Internationale Veröffentlichungsnummer: WO 2012/007354

(56) Entgegenhaltungen:
- EP-A1- 1 323 752
- EP-A1- 1 352 915
- DE-A1- 19 809 220

## Beschreibung

Die Erfindung betrifft ein Verfahren zur Herstellung von wässrigen Polymerdispersionen mittels teilkontinuierlicher radikalisch initiierter Emulsionspolymerisation von Vinylester und Ethylen, und gegebenenfalls weiteren ethylenisch ungesättigten Comonomeren.

Wässrige Dispersionen basierend auf Vinylacetat mit weiteren Comonomeren werden traditionell im Chargen- oder Batchverfahren hergestellt. Diese Vorgehensweise erlaubt höchste Flexibilität für ein breites Produktportfolio mit kleinen bis mittelgroßen Produkten; hierbei wird unter mittelgroß ein Volumen bis zu 10.000 t pro Jahr verstanden. Für Produkte mit größeren Absatzvolumina werden auch kontinuierliche Verfahren in Erwägung gezogen. Nachteilig beim kontinuierlichen Verfahren ist der prinzipiell gewünschte hohe Ausstoß der Anlage, der dieses Verfahren für Produkte mit kleineren Absatzvolumina unattraktiv macht, da in zu kurzer Zeit zu große Mengen anfallen und gelagert werden müssen. Andererseits besteht natürlich der Bedarf die Produktivität auch für kleinere Produkte im Batchverfahren zu steigern, da das Batchverfahren deutlich ineffizienter ist als ein kontinuierliches Verfahren.

Zur Verdeutlichung werden hier nochmals die Begrifflichkeiten definiert:

Batchverfahren sind diskontinuierliche Verfahren, in welchen alle Edukte (außer den Initiatoren oder nur Teile der Initiatoren) vorgelegt werden, und nur die Initiatoren oder Teile der Initiatoren dosiert werden.

Im diskontinuierlichen Semi- oder Teilbatchverfahren, werden die Edukte nicht vollständig vorgelegt, sondern es werden auch Monomere und wässrige Lösungen/Emulsionen von Schutzkolloiden und/oder Emulgatoren zumindest teilweise dosiert.

Im kontinuierlichen Verfahren werden alle Edukte nach einer Startphase (in der Regel ein Batchprozess) über lange Zeit (mehrere Tage bis Wochen) kontinuierlich in den Reaktor oder in eine Reaktorkaskade dosiert und das Produkt kontinuierlich entnommen.

Batchverfahren und Semibatchverfahren werden in der Umgangssprache häufig nicht unterschieden, daher ist Sorgfalt in der Diskussion geboten. Auch der Begriff "Semicontinuous" oder "Teilkontinuierlich" wird in der Literatur häufig für das in dieser Schrift als "Semibatch" bezeichnete Verfahren verwendet. Das wesentliche Charakteristikum des (Semi-)Batchprozesses ist, dass er nach Erreichen der vollständigen Füllung des Reaktors beendet wird, der Reaktor entleert und neu gestartet wird. Das Grundprinzip eines kontinuierlichen Prozesses, häufig in Rührkesselkaskaden, ist, dass die Reaktionskomponenten kontinuierlich in den Reaktor eingespeist werden und das Polymerisationsprodukt in gleichem Maße kontinuierlich entnommen wird.

Die kontinuierliche Polymerisation von Vinylacetat und Ethylen ist bekannt und vielfach in der Patentliteratur beschrieben:

In der DE-A 2456576 wird ein Verfahren zur kontinuierlichen Polymerisation von Vinylacetat-Ethylen-Dispersionen in einem Druckreaktor mit nachgeschaltetem Reaktionsrohr beschrieben.

Zur Vermeidung von Wandanlagerung und zur Sicherstellung eines gleichmäßigen Verlaufs der Polymerisation wird empfohlen ein Redoxinitiatorgemisch einzusetzen, welches einen 3- bis 10-fachen Überschuß an Reduktionsmittel enthält.

In der EP 1174445 A1 wird ein Saatlatexverfahren zur kontinuierlichen Polymerisation von Vinylester-Ethylen-Copolymerisaten beschrieben, bei dem das Endprodukt selbst als Saatlatex eingesetzt wird. Es werden grobteiligere Polymerpartikel mit einem gewichtsmittleren Durchmesser oberhalb von 1000 nm erhalten.

Die EP 1323752 A1 beschreibt ein Verfahren zur kontinuierlichen Polymerisation von Schutzkolloid-stabilisierten Polymerisaten auf Basis von Vinylestern und Ethylen. Mit Polyvinylalkohol als verwendetem Schutzkolloid werden Dispersionen mit einem gewichtsmittleren Durchmesser Dw von 800 bis 1400 nm erhalten, wobei das Schutzkolloid in beide Reaktoren zudosiert wird.

Ein teilkontinuierliches (semicontinuous) Verfahren kombiniert die beiden Grundprinzipien des Batch- und des kontinuierlichen Prozesses. Der Reaktor wird im diskontinuierlichen Batchprozess (oder Semibatchprozess) gestartet bis die vollständige Füllung erreicht wird. Zu dem Zeitpunkt an dem der Batchprozess wegen des Erreichens der vollständigen Füllung beendet wird (meist geschieht das schon vor diesem Zeitpunkt um sogenannten Flüssigkeitsdruck zu vermeiden) setzt der kontinuierliche Prozess ein bei dem dem Reaktor gleichzeitig Material zugeführt und entnommen wird. Diese zweite Phase kann grundsätzlich beliebig lange dauern, wird sich in der Praxis jedoch an den Volumina der nachgeschalteten Lagerbehältern richten.

Ein teilkontinuierliches oder semikontinuierliches Polymerisationsverfahren wird in der US-A 4946891 beschrieben. Dieses Verfahren beschreibt die Polymerisation von Vinylacetat mit weiteren flüssigen Monomeren wie Butylacrylat. Aufgabe war es, die Partikelgröße der Emulsionspolymerisate im Vergleich zum vollkontinuierlichen Prozess zu reduzieren und Eigenschaften wie Glanz und Nassabrieb von Dispersionsfarben zu verbessern. Die Polymerisation wird unter Normaldruck durchgeführt und die Entnahme des Produktes erfolgt durch schlichtes Überlaufen des Reaktors in ein zweites Gefäß.

Die EP 1266909 B1 beschreibt ein teilkontinuierliches Verfahren zur Emulsionspolymerisation für die Erzeugung eines bimodalen Produktes. In diesem Verfahren werden die Edukte in einen Reaktor dosiert und der Ansatz auf Polymerisationstemperatur gebracht. Anschließend wird grenzflächenaktives Mittel oder Saatlatex zugegeben. Ist der Reaktor gefüllt, wird kontinuierlich Produkt aus dem Reaktor entnommen, im selben Maß wie die Zudosierung erfolgt, und in einem zweiten Behälter gesammelt. Der Prozeß wird solange ausgeführt bis das im Reaktor zudosierte Volumen das 1,05- bis 2-fache des Reaktorvolumens beträgt.

Mit diesem Hintergrund war die Aufgabe gegeben, ein Polymerisationsverfahren zu entwickeln, das deutlich effizienter ist als ein Batchverfahren, andererseits aber die Nachteile eines kontinuierlichen Verfahrens vermeidet.

Gegenstand der Erfindung ist ein Verfahren zur Herstellung von wässrigen Polymerdispersionen mittels radikalisch initiierter Emulsionspolymerisation, in wässrigem Medium, von Vinylester und Ethylen und gegebenenfalls weiteren ethylenisch ungesättigten Comonomeren, in hintereinandergeschalteten Polymerisations-reaktoren, dadurch gekennzeichnet, dass in einer ersten diskontinuierlichen Polymerioationsphase in den ersten Polymerisationsreaktor die Edukte zur Polymerisation zumindest teilweise vorgelegt werden und der Rest zudosiert wird, wobei die Polymerisation bei einem Druck p von 5 bis 120 bar abs. und einer Temperatur T von 20°C bis 120°C ausgeführt wird, und bei einem Füllgrad des Reaktors von größer 90 Vol.-%, und einem Umsatz von mindestens 90 Gew.-% der bis dahin eingesetzten Monomere, in einer zweiten kontinuierlichen Polymerisationsphase, dem ersten Polymerisationsreaktor die Edukte kontinuierlich zugeführt und kontinuierlich Produkt entnommen wird und das Produkt kontinuierlich in einen zweiten Polymerisationsreaktor überführt wird, wobei ab diesem Zeitpunkt Zudosierung von Edukt und Entnahme von Produkt im ersten Polymerisationsreaktor so gesteuert werden, dass diese Mengen einander entsprechen, und im zweiten Polymerisationsreaktor die Polymerisation bei einem Druck p von < 5 bar abs. bis zu einem Umsatz von mindestens 98 Gew.-% der eingesetzten Monomere , bezogen auf das Gesamtgewicht der im Verfahren eingesetzten Monomermenge, weitergeführt wird.

Geeignete Vinylester sind solche von Carbonsäuren mit 1 bis 12 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Hexion). Besonders bevorzugt ist Vinylacetat. Die genannten Vinylester werden im allgemeinen in einer Menge von 30 bis 90 Gew,-%, bezogen auf das Gesamtgewicht der Monomere, copolymerisiert.

Ethylen wird im allgemeinen in einer Menge von 1 bis 40 Gew.-%, vorzugsweise 10 bis 30 Gew.-%, jeweils bezogen auf das Gesamtgewicht der Monomere, copolymerisiert.

Geeignete weitere Comonomeren sind solche aus der Gruppe der Ester der Acrylsäure oder Methacrylsäure, der Vinylhalogenide wie Vinylchlorid, der Olefine wie Propylen. Geeignete Methacrylsäureester oder Acrylsäureester sind Ester von unverzweigten oder verzweigten Alkoholen mit 1 bis 15 C-Atomen wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Bevorzugt sind Methylacrylat, Methylmethacrylat, n-Butylacrylat und 2-Ethylhexylacrylat. Diese Comonomere werden gegebenenfalls in einer Menge von 1 bis 40 Gew.-%, vorzugsweise 1 bis 20 Gew.-%, jeweils bezogen auf das Gesamtgewicht der Monomere, copolymerisiert.

Gegebenenfalls können noch 0,05 bis 10 Gew.-%, bezogen auf das Gesamtgewicht der Monomere, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weiteren Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Geeignete Hilfsmonomere sind auch Monomere mit Hydroxy- oder Carboxyl-Gruppen, wie beispielsweise Methacrylsäure- und Acrylsäurehydroxyalkylester wie Hydroxyethyl-, Hydroxypropyl- oder Hydroxybutylacrylat oder -methacrylat sowie 1,3-Dicarbonylverbindungen wie Acetacetoxyethylacrylat, Acetacetoxypropylmethacrylat, Acetacetoxyethylmethacrylat, Acetacetoxybutylmethacrylat, 2,3- Di(acetacetoxy)propylmethacrylat und Acetessigsäureallylester.

Geeignete Hilfsmonomere sind auch epoxidfunktionelle Comonomere wie Glycidylmethacrylat, Glycidylacrylat, Allylglycidether, Vinylglycidether. Weitere Beispiele für Hilfsmonomere sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, vorzugsweise mit Alkyl- bzw- Alkoxygruppen mit jeweils 1 bis 2 C-Atomen, beispielsweise Vinyltrimethoxysilan, Vinyltriethoxysilan, 3-Methacryloxypropyltrimethoxysilan.

Bevorzugt werden Comonomergemische polymerisiert, welche Vinylacetat und Ethylen enthalten, besonders bevorzugt 10 bis 30 Gew.-% Ethylen enthalten; sowie Comonomermischungen, welche 50 bis 98 Gew.-% Vinylacetat und 1 bis 40 Gew.-% Ethylen, besonders bevorzugt 10 bis 30 Gew.-% Ethylen, und vorzugsweise 1 bis 20 Gew.-% von einem oder mehreren weiteren Comonomeren aus der Gruppe der Vinylester mit 1 bis 12 C-Atomen im Carbonsäurerest wie Vinylpropionat, Vinyllaurat, Vinylester von alpha-verzweigten Carbonsäuren mit 9 bis 11 C-Atomen wie VeoVa9, VeoVa10, VeoVa11 enthalten; und Comonomergemische von Vinylacetat, mit 1 bis 40 Gew.-% Ethylen, besonders bevorzugt 10 bis 30 Gew.-% Ethylen und vorzugsweise 1 bis 20 Gew.-% (Meth) Acrylsäureester von unverzweigten oder verzweigten Alkoholen mit 1 bis 15 C-Atomen, insbesondere Methylacrylat, Methylmethacrylat, Ethylacrylat, n-Butylacrylat n-Butylmethacrylat, Hexylacrylat oder 2-Ethylhexylacrylat; und Comonomergemische von Vinylacetat, 1 bis 20 Gew.-% Vinyllaurat oder Vinylester einer alpha-verzweigten Carbonsäure mit 9 bis 11 C-Atomen, sowie 1 bis 20 Gew.-% (Meth)Acrylsäureester von unverzweigten oder verzweigten Alkoholen mit 1 bis 15 C-Atomen, insbesondere Methylacrylat, Methylmethacrylat, Ethylacrylat, n-Butylacrylat n-Butylmethacrylat, Hexylacrylat oder 2-Ethylhexylacrylat, welche noch 1 bis 40 Gew. -% Ethylen, besonders bevorzugt 10 bis 30 Gew.-% Ethylen, enthalten; wobei die genannten Comonomergemische jeweils noch die oben aufgezählten Hilfsmonomere in den genannten Mengen enthalten können, und sich die Angaben in Gew. -% in den Comonomergemischen, gegebenenfalls unter Berücksichtigung des Hilfsmonomeranteils, auf jeweils 100 Gew. -% aufaddieren.

Die Monomerauswahl bzw. die Auswahl der Gewichtsanteile der Comonomere erfolgt dabei so, dass im allgemeinen eine Glasübergangstemperatur Tg von -50°C bis +50°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise voraus berechnet werden. Nach Fox T. G., Bull. Am. Physics Soc. 1, 3, page 123 (1956) gilt; 1/Tg = x₁/Tg₁ + x₂/Tg₂ + ··· + xₙ/Tgₙ, wobei xₙ für den Massenbruch (Gew. -%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) ausgeführt.

Die Initiierung der Polymerisation erfolgt vorzugsweise mit den für die Emulsionspolymerisation gebräuchlichen Redox-Initiator-Kombinationen. Beispiele für geeignete Oxidationsinitiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Isopropylbenzolmonohydroperoxid, Azobisisobutyronitril. Bevorzugt werden die Natrium-, Kalium- und Ammoniumsalze der Peroxodischwefelsäure und Wasserstoffperoxid. Die genannten Initiatoren werden im allgemeinen in einer Menge von 0,01 bis 2,0 Gew.-%, bezogen auf das Gesamtgewicht der Monomere, eingesetzt.

Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat (Brüggolit) und (Iso-)Ascorbinsäure. Bevorzugt werden Natriumhydroxymethansulfinat und Natriumsulfit eingesetzt. Die Reduktionsmittelmenge beträgt vorzugsweise 0,015 bis 3 Gew.-%, bezogen auf das Gesamtgewicht der Monomere.

Die genannten Oxidationsmittel, insbesondere die Salze der Peroxodischwefelsäure, können auch alleinig als thermische Initiatoren eingesetzt werden.

Zur Steuerung des Molekulargewichts können während der Polymerisation regelnde Substanzen eingesetzt werden. Falls Regler eingesetzt werden, werden diese üblicherweise in Mengen zwischen 0,01 bis 5,0 Gew.-%, bezogen auf das Gesamtgewicht der Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd. Vorzugsweise werden keine regelnden Substanzen verwendet.

Für die Durchführung der Emulsionspolymerisation geeignete grenzflächenaktive Substanzen sind die üblicherweise für diese

Zwecke eingesetzten Schutzkolloide und Emulgatoren.

Geeignete Schutzkolloide sind Polyvinylalkohole; Polyvinylacetale; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Bevorzugt wird der Einsatz von teilverseiften oder vollverseiften Polyvinylalkoholen, besonders bevorzugt aus der Gruppe der teilverseiften Polyvinylalkohole mit einem Hydrolysegrad von 80 bis 95 Mol-% und einer Höpplerviskosität, in 4 %-iger wässriger Lösung von 1 bis 30 mPas (Methode nach Höppler bei 20°C, DIN 53015). Bevorzugt sind auch teilverseifte, hydrophob modifizierte Polyvinylalkohole mit einem Hydrolysegrad von 80 bis 95 Mol-% und einer Höpplerviskosität, in 4 %-iger wässriger Lösung von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Einheiten beträgt vorzugsweise 0,1 bis 10 Gew.-%, bezogen auf das Gesamtgewicht des teilverseiften Polyvinylalkohols. Es können auch Gemische der genannten Polyvinylalkohole eingesetzt werden. Weitere bevorzugte Polyvinylalkohole sind teilverseifte, hydrophobierte Polyvinylalkohole, die durch polymeranaloge Umsetzung, beispielsweise Acetalisierung der Vinylalkoholeinheiten mit C₁- bis C₄-Aldehyden wie Butyraldehyd erhalten werden. Der Anteil der hydrophoben Einheiten beträgt vorzugsweise 0,1 bis 10 Gew.-%, bezogen auf das Gesamtgewicht des teilverseiften Polyvinylacetats. Der Hydrolysegrad beträgt von 80 bis 95 Mol-%, vorzugsweise 85 bis 94 Mol-%, die Höpplerviskosität (DIN 53015, Methode nach Höppler, 4 %-ige wässrige Lösung) von 1 bis 30 mPas, vorzugsweise 2 bis 25 mPas. Bei dem erfindungsgemäßen Verfahren werden am meisten bevorzugt Polyvinylalkohole mit einem Hydrolysegrad von 85 bis 94 Mol-%- und einer Höpplerviskosität, in 4 %-iger wässriger Lösung von 3 bis 25 mPas (Methode nach Höppler bei 20°C, DIN 53015) eingesetzt. Die genannten Schutzkolloide sind mittels dem Fachmann bekannter Verfahren zugänglich.

Die Schutzkolloide werden im allgemeinen in einer Menge von 0 bis 10 Gew.-%, bevorzugt 0,5 bis 3 Gew.-%, bezogen auf das Gesamtgewicht der Monomere, bei der Polymerisation zugesetzt.

Geeignete Emulgatoren sind anionische, kationische und nichtionische Emulgatoren. Als Emulgatoren werden vorzugsweise nichtionische Emulgatoren oder anionischen Emulgatoren oder Kombinationen aus nichtionischen und anionischen Emulgatoren eingesetzt.

Geeignete nichtionische Emulgatoren sind beispielsweise Acyl-, Alkyl-, Oleyl- und Alkylarylethoxylate. Diese Produkte sind beispielsweise im Handel unter der Bezeichnung Genapol^{(R)} oder Lutensol^{(R)} erhältlich. Hierunter fallen ethoxylierte Mono-, Di- und Tri-Alkylphenole, vorzugsweise mit einem Ethoxylierungsgrad von 3 bis 50 Ethylenoxid-Einheiten und C₄- bis C₁₂-Alkylresten, sowie ethoxylierte Fettalkohole, vorzugsweise mit einem Ethoxylierungsgrad von 3 bis 80 Ethylenoxid-Einheiten und C₈- bis C₃₆-Alkylresten. Geeignete nichtionische Emulgatoren sind auch C₁₃-C₁₅-Oxoalkoholethoxylate mit einem Ethoxylierungsgrad von 3 bis 30 Ethylenoxid-Einheiten, C₁₆-C₁₈-Fettalkoholethoxylate mit einem Ethoxylierungsgrad von 11 bis 80 Ethylenoxid-Einheiten, C₁₀-Oxoalkoholethoxylate mit einem Ethoxylierungsgrad von 3 bis 11 Ethylenoxid-Einheiten, C₁₃-Oxoalkoholethoxylate mit einem Ethoxylierungsgrad von 3 bis 20 Ethylenoxid-Einheiten, Polyoxyethylensorbitanmonooleat mit 20 Ethylenoxidgruppen, Copolymere aus Ethylenoxyd und Propylenoxyd mit einem Mindestgehalt von 10 Gew.-% Ethylenoxid, Polyethylenoxid-Ether von Oleylalkohol mit einem Ethoxylierungsgrad von 4 bis 20 Ethylenoxid-Einheiten sowie die Polyethylenoxid-Ether von Nonylphenol mit einem Ethoxylierungsgrad von 4 bis 20 Ethylenoxid-Einheiten.

Beispiele für geeignete anionische Emulgatoren sind Natrium-, Kalium- und Ammoniumsalze von geradkettigen aliphatischen Carbonsäuren mit 12 bis 20 C-Atomen; Natriumhydroxyoctadecansulfonat; Natrium-, Kalium- und Ammoniumsalze von Hydroxyfettsäuren mit 12 bis 20 C-Atomen und deren Sulfonierungs- und/oder Acetylierungsprodukte; Natrium-, Kalium- und Ammoniumsalze von Alkylsulfaten, auch als Triethanolaminsalze, und Natrium-, Kalium- und Ammoniumsalze von Alkylsulfonaten mit jeweils 10 bis 20 C-Atomen und von Alkylarylsulfonaten mit 12 bis 20 C-Atomen; Dimethyldialkylammoniumchlorid mit 8 bis 18 C-Atomen und deren Sulfonierungsprodukte; Natrium-, Kalium- und Ammoniumsalze von Sulfobernsteinsäureestern mit aliphatischen gesättigten einwertigen Alkoholen mit 4 bis 16 C-Atomen und von Sulfobernsteinsäure-4-Estern mit Polyethylenglykolethern von einwertigen aliphatischen Alkoholen mit 10 bis 12 C-Atomen, insbesondere deren Di-Natriumsalze, und von Sulfobernsteinsäure-4-Ester mit Polyethylenglykolnonylphenylether, insbesondere dessen DiNatriumsalz, und von Sulfobernsteinsäure-bis-cyclohexylester, insbesondere dessen Natriumsalz; Ligninsulfonsäure sowie deren Calcium-, Magnesium-, Natrium- und Ammoniumsalze; Harzsäuren sowie hydrierte und dehydrierte Harzsäuren sowie deren Alkalisalze.

Die Emulgatormenge beträgt vorzugsweise 3 bis 10 Gew.-%, bezogen auf das Gesamtgewicht der Monomere. Es können auch Gemische aus nichtionischen und anionischen Emulgatoren eingesetzt werden, oder auch Gemische aus den genannten Emulgatoren und Schutzkolloiden eingesetzt werden, jeweils in den obengenannten Mengen.

Die Polymerisation wird im allgemeinen in mindestens zwei hintereinander geschalteten Polymerisationsreaktoren durchgeführt, vorzugsweise in einer Kaskade aus einem Druckreaktor und anschließend mindestens einem Niederdruckreaktor. Als Druckreaktoren und Niederdruckreaktoren können die herkömmlichen, entsprechend dimensionierten Stahlreaktoren mit Rühreinrichtung, Heiz-/Kühlsystem sowie Leitungen zur Zuführung der Edukte bzw. Abführung der Produkte eingesetzt werden. Die bevorzugte Anlagenkonfiguration besteht aus einem Druckreaktor und einem Niederdruckreaktor.

Im Druckreaktor wird die Polymerisation bei einem Druck von 5 bis 120 bar abs., vorzugsweise 10 bis 80 bar abs. durchgerührt. Die Polymerisationstemperatur beträgt 20°C bis 120°C, vorzugsweise 60°C bis 95°C.

In einer bevorzugten Ausführungsform werden in der ersten, diskontinuierlichen Polymerisationsphase die Vinylester-Monomere, Ethylen sowie gegebenenfalls weitere Comonomere und/oder Hilfsmonomere zu mindestens 50 Gew.-% im Druckreaktor vorgelegt, besonders bevorzugt zu 80 bis 100 Gew.-% vorgelegt, jeweils bezogen auf das Gesamtgewicht an Monomer, welches in der diskontinuierlichen Phase zugegeben wird.

Der Anteil an Schutzkolloid und/oder Emulgator, welcher in der ersten, diskontinuierlichen Polymerisationsphase eingesetzt wird, wird vorzugsweise zu 60 bis 100 Gew.-% vorgelegt, bezogen auf das Gesamtgewicht an Schutzkolloid und/oder Emulgator, welches in der diskontinuierlichen Phase zugegeben wird, und der Rest bis zum Ende der diskontinuierlichen Polymerisationsphase zudosiert.

Der Initiatoranteil, welcher in der ersten, diskontinuierlichen Polymerisationsphase eingesetzt wird, wird vorzugsweise zu mindestens 90 Gew.-%, besonders bevorzugt vollständig zudosiert, jeweils bezogen auf das Gesamtgewicht an Initiator, welches in der diskontinuierlichen Phase zugegeben wird.

Die diskontinierliche Polymerisationsphase im Druckreaktor erfolgt bis zu einem kritischen Füllgrad des Druckreaktors von größer 90 Vol.-%, vorzugsweise von größer 94 Vol.-%. Bei Annäherung des Füllgrades an die vollständige Füllung (100 Vol.-%) besteht die Gefahr der Überfüllung und eines schnellen Druckanstieges durch sogenannten hydraulischen Druck oder Flüssigkeitsdruckes. Hintergrund ist die Tatsache, dass bekanntermaßen Flüssigkeiten deutlich weniger kompressibel sind als Gase. Wird der Reaktor soweit aufgefüllt, dass er vollständig mit Flüssigkeit gefüllt ist, so steigt der Druck bei Zugabe von weiteren geringen Mengen rasant an und die Gefahr ist groß, dass der zugelassene Anlagendruck überschritten wird und ein sicherheitsrelevantes Ereignis eintritt.

Um dies zu vermeiden, wird bei Überschreiten des Füllgrades von 90 Vol.-% die Leitungsverbindung zu dem Niederdruckreaktor freigeschaltet. Diese Verbindung ist mit einem Druckhalteventil abgesperrt, das auf einen Druck p eingestellt ist. Durch dieses Druckhalteventil wird ein Überfüllen des Druckreaktors vermieden. Der Druck p orientiert sich an dem Sättigungsdruck des Ethylens im verbleibenden Reaktionsgemisch zu diesem Zeitpunkt. Die Löslichkeit von Ethylen in Vinylacetat ist bekannt und in der Literatur beschrieben. Der Druck p liegt zum Zeitpunkt des Übergangs in die zweite, kontinuierliche Polymerisationsphase und während der zweiten kontinuierlichen Polymerisationsphase vorzugsweise mindestens 5 bar über dem Sättigungsdruck um das Ethylen vollständig in die Dispersion einzulösen und ein Schaum- bzw. Gaspolster zu vermeiden. Andererseits liegt der Druck p zum Zeitpunkt des Übergangs in die zweite, kontinuierliche Polymerisationsphase und während der zweiten kontinuierlichen Polymerisationsphase vorzugsweise maximal 50 bar, besonders bevorzugt maximal 20 bar über dem Sättigungsdruck, da mit zunehmendem Abstand zum Sättigungsdruck die Kompressibilität des Reaktorinhaltes abnimmt und die Druckempfindlichkeit auf Dosierschwankungen deutlich zunimmt und die Prozesssicherheit nur noch schwer zu gewährleisten ist.

Ab einem Füllgrad von mindestens 90 Vol.-% und einem Umsatz von größer 90 Gew.-% in der diskontinuierlichen Phase werden die Edukte Comonomere, Schutzkolloide und/oder Emulgatoren, Initiatoren sowie gegebenenfalls weitere Edukte, dem Druckreaktor kontinuierlich zudosiert und simultan zu dieser Dosierung dem Druckreaktor genau so viel Masse an Polymerdispersion entnommen und dem Niederdruckreaktor zugeführt. Die Steuerung der zugeführten Masseströme erfolgt in üblicher Weise, beispielsweise über Pumpen mit Massezähler. Die Steuerung der abfließenden Masse erfolgt über eine Druckregelung, die bei einem Überschreiten des vorgegebenen Druckes p das Entnahmeventil in entsprechendem Maße öffnet, dass der gewünschte Solldruck im Druckreaktor gehalten werden kann,

Bevorzugt ist, dass zum Zeitpunkt des Umschaltens auf die kontinuierliche Polymerisationsphase der Polymerisationsumsatz mindestens 92 Gew.-% der bis dahin eingesetzten Monomere beträgt, besonders bevorzugt mindestens 95 Gew.-%. Bei geringeren Umsätzen ist die Rückführung von nicht umgesetztem Monomer in den Prozess unumgänglich, da sonst die Wirtschaftlichkeit des Verfahrens nicht gegeben wäre.

Während der Phase der kontinuierlichen Polymerisation ist darauf zu achten, dass der Umsatz zu keinem Zeitpunkt unter 92 Gew.-% fällt und besonders bevorzugt zu jedem Zeitpunkt mindestens 95 Gew.-% beträgt, jeweils bezogen auf die Gesamtmenge der bis dahin zudosierten Monomere. Die Umsatzrate kann in dem Fachmann bekannter Weise über die Dosierung der Edukte und Initiatoren gesteuert werden. Bei Unterschreiten der angegebenen Mindestumsatzraten wurde festgestellt, dass bei der vorliegenden Druckpolymerisation der Einbau flüchtigerer Comonomere wie Ethylen nur ungenügend erfolgt, und im anschließenden Niederdruckreaktor unverhältnismäßig hohe Mengen dieses Comonomeranteils verlorengehen.

Im allgemeinen wird die kontinuierliche Polymerisationsphase mindestens solange durchgeführt bis die dabei zugeführte Gewichtsmenge an Edukten mindestens der Gewichtsmenge entspricht, welche während der ersten diskontinuierlichen Polymerisations-phase zugegeben worden ist. Die kontinuierliche Polymerisationsphase wird vorzugsweise so betrieben, dass im gleichen Zeitraum wie in der diskontinuierlichen Polymerisationphase mindestens die gleiche Menge Polymerisationsprodukt gebildet wird wie in der diskontinuierlichen Polymerisationsphase. Besonders bevorzugt entspricht der Umfang der kontinuierlichen Polymerisationsphase einem Umfang der 100 bis 400 Gew.-%, insbesonders 100 bis 150 Gew.-%, jeweils der Ansatzgröße der diskontinuierlichen Polymerisationsphase, entspricht. Am meisten bevorzugt ist die Verdopplung der Ansatzgröße.

Die dem Druckreaktor entnommenen Produktmengen werden kontinuierlich in vorzugsweise einen entsprechend dimensionierten Niederdruckreaktor überführt. Das Volumen des Niederdruckreaktors hängt davon ab, wie lange die kontinuierliche Phase der Polymerisation durchgeführt wird.

Der Niederdruckreaktor wird bei einem Druck von < 5 bar abs. betrieben, vorzugsweise beträgt der Druck ≤ 1 bar abs.. Die Temperatur im Niederdruckreaktor beträgt 20°C bis 120°C und ist im allgemeinen gleich oder niederer als die Temperatur im Druckreaktor. Die Polymerisation wird im Niederdruckreaktor bis zu einem Umsatz von mindestens 98 Gew.-% der eingesetzten Monomere fortgeführt. Dazu kann dem Niederdruckreaktor weiterer Initiator zudosiert werden. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden. Das im Niederdruckreaktor erhaltene Produkt hat vorzugsweise einen Restmonomergehalt von < 1000 ppm.

In einer bevorzugten Ausführungsform wird nicht umgesetztes Monomer zurückgewonnen und im Kreis geführt wird, um die Wirtschaftlichkeit des Verfahrens weiter zu steigern, Dies gelingt durch Kondensation aus dem Abgas und gegebenenfalls Redestillation der entsprechenden Monomere.

Die mit dem erfindungsgemäßen Verfahren erhältlichen wässrigen Dispersionen haben einen Feststoffgehalt von 30 bis 75 Gew.-%, vorzugsweise von 50 bis 60 Gew.-%.

Aus den wässrigen Polymerdispersionen können in Wasser redispergierbare Polymerpulver erhalten werden. Zur Herstellung der in Wasser redispergierbaren Polymerpulver werden die wässrigen Dispersionen, gegebenenfalls nach Zusatz von Schutzkolloiden als Verdüsungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im Allgemeinen im Bereich von 45°C bis 120°C, bevorzugt 60°C bis 90°C, je nach Anlage, Tg des Harzes und gewünschtem Trocknungsgrad, gewählt.

In der Regel wird das Trocknungshilfsmittel (Schutzkolloid) in einer Gesamtmenge von 3 bis 30 Gew.-%, bezogen auf die polymeren Bestandteile (Polymeranteil) der Dispersion, eingesetzt. Bevorzugt werden 5 bis 20 Gew.-% bezogen auf den Polymeranteil eingesetzt.

Geeignete Trocknungshilfsmittel sind teilverseifte Polyvinylal-kohole; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Kasein oder Kaseinat, Sojaprotein, Gelatine; Ligninsulfonate; synthetische Polymere wie Poly(meth)-acrylsäure, Copolymerisate von (Meth)acrylaten mit carboxylfunktionellen Comonomereinheiten, Poly(meth)acrylamid, Polyvi-nylsulfonsäuren und deren wasserlöslichen Copolymere; Melaminformaldehydsulfonate, Naphthalinformaldehydsulfonate, Styrolmaleinsäure- und Vinylethermaleinsäure-Copolymere, Bevorzugt werden keine weiteren Schutzkolloide als Polyvinylalkohole als Trocknungshilfsmittel eingesetzt, wobei die als Schutzkolloide bevorzugten Polyvinylalkohole auch bevorzugt als Trocknungshilfsmittel eingesetzt werden.

Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Metakaolin, calciniertes Kaolin, Silicate mit Teilchengrößen vorzugsweise im Bereich von 10 nm bis 100 µm.

Die wässrigen Polymerdispersionen bzw. die daraus erhältlichen in Wasser redispergierbaren Dispersionspulver können in den dafür typischen Anwendungsbereichen eingesetzt werden. Beispielsweise in bauchemischen Produkten, gegebenenfalls in Verbindung mit hydraulisch abbindenden Bindemitteln wie Zementen (Portland-, Aluminat-, Trass-, Hütten-, Magnesia-, Phosphatzement), Gips und Wasserglas, für die Herstellung von Bauklebern, insbesondere Fliesenkleber und Vollwärmeschutzkleber, Putzen, Spachtelmassen, Fußbodenspachtelmassen, Verlaufsmassen, Dichtschlämmen, Fugenmörtel und Farben und zur Betonmodifizierung. Ferner als Bindemittel für Beschichtungsmittel und Klebemittel oder als Beschichtungs- bzw. Bindemittel für Textilien und Papier.

Die Vorteile des erfindungsgemäßen teilkontinuierlichen Polymerisationsverfahrens im Vergleich zu einem diskontinuierlichen Batchprozess liegen insbesondere in der Produktivitätserhöhung: Bei einer typischen diskontinuierlichen Polymerisation (Batch) mit 2 h Vorbereitungszeit, 6 h Polymerisationszeit und 2 h Aufarbeitungszeit beträgt bei einer Verdopplung der Chargengröße im teilkontinuierlichen Verfahren (Teilkonti) von 20 t auf 40 t die Produktivitätserhöhung ca. 25 %, wenn man die kontinuierliche Polymerisationsphase so betreibt, dass in weiteren 6 h weitere 20 t Produkt anfallen

| | |
|---|---|
| Batch: | 20 t in 10 h => 2 t/h |
| Teilkonti: | 40 t in 16 h => 2,5 t/h |

Bei einer Verdreifachung des Ausstoßes ergibt sich eine spezifische Leistung von 2,7 t/h (+ 36 %) bei einer Verfünffachung eine spezifische Leistung von 2,94 t/h (+ 47 %). Dies zeigt, dass der größte relative Nutzen bei einer Verdopplung anfällt.

Der Vorteil des erfindungsgemäßen teilkontinuierlichen Verfahrens im Vergleich zum vollkontinuierlichen Prozess ist der, dass bei dem teilkontinuierliche Prozess die erzeugten Mengen nur das 2- bis 5- fache der üblichen Batchgröße betragen, wonach gegebenenfalls wieder ein Produktwechsel in der Anlage erfolgen kann. Im vollkontinuierlichen Prozess ist die Umstellung von einem Produkt auf ein anderes nicht ohne weiteres möglich und insbesondere nicht zielführend, wenn dies sehr häufig erfolgen soll um die erzeugten Mengen niedrig zu halten.

Die nachfolgenden Beispiele dienen der weiteren Erläuterung der Erfindung:

### Vergleichsbeispiel 1:

### (Polyvinylalkohol-stabilisierte Dispersion in Batchfahrweise)

In einem Druckreaktor (Volumen: 570 Liter) wurden 95,5 kg eines Polyvinylalkohols, mit einer Viskosität nach Höppler in einer 4 Gew.-%-igen Lösung von 4 mPas, und einem Hydrolysegrad von 88 Mol-%, vorgelegt. Zusätzlich dazu wurden 224 kg Vinylacetat und 101,5 kg entionisiertes Wasser vorgelegt. Der Reaktor wurden auf einen Druck von 21 bar und eine Temperatur von 55°C gebracht (entsprechend einer Ethylenmenge von 18,5 kg) und die Polymerisation durch Start der Initiatordosierungen tert.-Butylhydroperoxid (3 Gew.-% in Wasser) und Ascorbinsäure (5 Gew.-% in Wasser), mit je 750 g/h, gestartet. Bei Reaktionsbeginn, erkennbar an einem Temperaturanstieg, wurde die Reaktionstemperatur mit Hilfe der freiwerdenden Polymerisationswärme auf 90°C und der Druck auf 44 bar angehoben. Die Initiatordosierungen wurden auf je 350 g/h reduziert. 45 Minuten nach Reaktionsbeginn wurden weitere Dosierungen gestartet: 40 kg/h Vinylacetat für eine Dauer von 90 Minuten (entsprechend 60 kg Vinylacetat) und 22 kg/h einer 10,6 Gew.-%-igen wässrigen Polyvinylalkohollösung, mit einer Viskosität nach Höppler in einer 4 Gew.-%-igen Lösung von 4 mPas, und einem Hydrolysegrad von 88 Mol-%, für eine Dauer von 120 Minuten (entsprechend einer Menge von 44 kg). Ethylen wurde bei einem Solldruck von 44 bar nachdosiert bis zu einer Gesamtethylenmenge von 34 kg.

Nach Ende der Dosierungen wurden die Initiatordosierungen noch 30 Minuten mit jeweils 1300 g/h nachdosiert, wobei der Druck auf 20 bar abfiel (Zeitpunkt 1) . Anschließend wurde der Ansatz auf 65°C abgekühlt und in einen Drucklosreaktor (Niederdruckreaktor) überführt und dort bei einem Druck von 700 mbar abs. durch Zugabe von 1 kg tert.-Butylhydroperoxid-Lösung (10 Gew.-% in Wasser) und 2 kg Ascorbinsäure-Lösung (5 Gew.-% in Wasser) nachpolymerisiert.

Die erhaltene Dispersion hatte einen Feststoffgehalt von 59 Gew.-%, eine Viskosität von 1800 mPas (Brookfield, 20, 23°C), eine Glasübergangstemperatur Tg von 15,0°C. Der Mittelwert der gewichtsmittleren Partikelgrößenverteilung Dw der Dispersion lag bei 1450 nm (Spezifische Oberfläche: 5,2 m²/g) .

### Beispiel 2:

### (Polyvinylalkohol-stabilisierte Dispersion in teilkontinuierlichem Verfahren)

Das Vorgehen nach Vergleichsbeispiel 1 wurde identisch wiederholt bis zum Zeitpunkt 1. Die Dispersion enthielt zu diesem Zeitpunkt einen Gehalt an freiem Vinylacetat von ca. 2,0 Gew.-% (gemessen per Gaschromatographie), entsprechend einem Polymerisationsumsatz von ca. 96 Gew.-%. Der Füllgrad des Reaktors betrug ca. 92 Vol.-%.

Ab diesem Zeitpunkt wurden folgende Dosierungen gestartet: 130 kg/h Vinylacetat für eine Dauer von 145 Minuten (Menge 313 kg) und 82 kg/h einer 10,6 Gew.-%-igen wässrigen Polyvinylalkohollösung, mit einer Viskosität nach Höppler in einer 4 Gew. -%-igen Lösung von 4 mPas, und einem Hydrolysegrad von 88 Mol.-%, für eine Dauer von 145 Minuten (entsprechend einer Menge von 198 kg). Ethylen wurde mit einer Rate von 14 kg/h nachdosiert bis zu einer Ethylenmenge von 34 kg. Die Initiatordosierungen werden weiterhin mit je 1300 g/h dosiert. Durch die neu einsetzenden Dosierungen stieg der Reaktordruck wieder an.

Ab Erreichen eines Reaktordruckes von 30 bar wurde mit dem Transfer in den Drucklosreaktor (Niederdruckreaktor) begonnen. Die Transferrate wurde dabei so gewählt, dass der Druck im Druckreaktor konstant bei 30 bar gehalten werden konnte. Der Druck im Niederdruckreaktor wurde auf 700 mbar abs. eingestellt. Nach Ende der Monomerdosierungen wurden die Initiator-dosierungen noch 30 Minuten mit jeweils 1300 g/h nachdosiert. Anschließend wurde der Ansatz auf 65°C abgekühlt und in den Niederdruckreaktor überführt und dort mit der bereits transferierten Dispersion vereinigt. Die Mischung wurde dann bei einem Druck von 700 mbar abs. durch Zugabe von 2 kg tert.-Butylhydroperoxid-Lösung (10 Gew.-% in Wasser) und 4 kg Ascorbinsäure-Lösung (5 Gew.-% in Wasser) nachpolymerisiert.

Die erhaltene Dispersion hatte einen Feststoffgehalt von 60 Gew.-%, eine Viskosität von 1915 mPas (Brookfield, 20, 23°C), eine Glasübergangstemperatur Tg von 15,0°C. Der Mittelwert der gewichtsmittleren Partikelgrößenverteilung Dw der Dispersion lag bei 1650 nm (Spezifische Oberfläche: 4,5 m²/g),

Die Dispersionen aus Vergleichsbeispiel 1 und Beispiel 2 wurden durch Sprühtrocknung in Dispersionspulver überführt. Dazu wurden die Dispersionen aus Vergleichsbeispiel 1 und Beispiel 2, jeweils nach Zusatz von 7 Gew.-%, jeweils bezogen auf Polymer, eines Polyvinylalkoholes mit einem Verseifungsgrad von 88 Mol-% und einer Viskosität nach Höppler von 4 mPas, mittels Zweistoffdüse versprüht. Als Verdüsungskomponente diente auf 4 bar vorgepreßte Luft, die gebildeten Tropfen wurden mit auf 125°C erhitzter Luft im Gleichstrom getrocknet. Das erhaltene trockene Pulver wurde mit 12 Gew.-% handelsüblichem Antiblockmittel (Calciumcarbonat) versetzt.

Bestimmung der Haftzugfestigkeiten eines mit den Dispersionspulvern modifizierten, zementären Fliesenklebers:

Die Haftzugfestigkeiten im Fliesenkleber wurden in folgender Trockenmörtelrezeptur überprüft (4 Gew.-% polymeranteil) :

| | |
|---|---|
| Quarzsand | 555 Teile |
| Portlandzement | 400 Teile |
| Cellulose | 5 Teile |
| Dispersionspulver | 40 Teile |

Diese Trockenmischung wurde jeweils mit Wasser angerührt.

Es wurden die Haftzugfestigkeiten nach 3 Lagerbedingungen bestimmt ;

| | |
|---|---|
| 28 T: | 28 Tage Trockenlagerung im Normklima (DIN 50014, 23°C, 50 % Luftfeuchte) |
| 7T/21N: | 7 Tage Trockenlagerung im Normklima / 21 Tage Nasslagerung in Wasser 23°C |
| 14T/14TS+70°C/1T: | 14 Tage Trockenlagerung im Normklima / 14 Tage Wärmelagerung bei 70°C / 1 Tag Trockenlagerung im Normklima |

Zur Bestimmung der Haftzugfestigkeit wurde der Mörtel 3 mm dick mit der Traufel und einer 5 x 5 cm² Schablone auf einen Betonuntergrund aufgespachtelt und die Fliesen verklebt. Anschließend wurde wie oben beschrieben gelagert. Nach der Lagerung wurden mit Epoxidkleber auf die Fliesen Metallplatten aufgeklebt, die als Zuganker für die Messungen dienten. Die Haftzugswerte wurden mit einem Abzugsgerät der Fa. Herion bestimmt. Die Meßwerte in N/mm² stellen einen Mittelwert aus 3 Messungen dar.

Die Ergebnisse dieser Prüfung sind in folgender Tabelle 1 zusammengefasst.

| Beispiel | 28T [N/mm²] | 7T/21N [N/mm²] | 14T/14TS+70/1T [N/mm²] |
|---|---|---|---|
| Pulver V1 | 1,43 | 0,88 | 1,21 |
| Pulver 2 | 1,68 | 0,75 | 1,62 |

Aus den Daten ist zu erkennen, dass die Polymereigenschaften bei dem mit dem erfindungsgemäßen, teilkontinuierlichen Verfahren hergestellten Produkt (Pulver 2) tendenziell besser sind als die des mit dem diskontinuierlichen Verfahren erhältlichen Produktes (Pulver V1) .

### Vergleichsbeispiel 3:

Polyvinylalkohol-/Emulgator-stabilisierte Polymerdispersion im Batchverfahren

In einem Druckreaktor (Volumen: 570 Liter) wurden folgende Stoffe vorgelegt:

88 kg entionisiertes Wasser, 19,2 kg einer 40 Gew. -%-igen Emulgatorlösung 1 von Iso-Tridecylalkoholpolyglykolether mit einem Ethoxylierungsgrad von 15 (Genapol X150), 4,8 kg einer 30 Gew.-%-igen Emulgatorlösung 2 von Alkansulfonat-Natrium-Salz (Mersolat), 2,18 kg Vinylsulfonat, 16,1 kg einer 10 Gew.-%-igen wässrigen Polyvinylalkohollösung, mit einer Viskosität nach Höppler in einer 4 Gew.-%-igen Lösung von 25 mPas, und einem Hydrolysegrad von 88 Mol-%, und 27,2 kg Vinylacetat, Der pH-Wert dieser Mischung wurde mit Ameisensäure auf 5, 0 eingestellt. Der Reaktor wurden auf einen Druck von 27 bar und eine Temperatur von 70 °C gebracht (entsprechend einer Ethylenmenge von 13 kg) und die Reaktion durch Start der Initiatordosierungen Ammoniumpersulfat-Lösung (10 Gew.-% in Wasser) und Natriumsulfit-Lösung (4 Gew.-% in Wasser) mit 780 g/h bzw. 1400 g/h gestartet.

10 Minuten nach Reaktionsbeginn wurden weitere Dosierungen gestartet:

56 kg/h Vinylacetat für eine Dauer von 240 Minuten (entsprechend 224 kg Vinylacetat), 15,7 kg/h einer wässrigen Lösung bestehend aus 36 kg entionisiertes Wasser, 14 kg Emulgatorlösung 1 und 12,8 kg einer 10 Gew.-%-igen wässrigen Polyvinylalkohollösung, mit einer Viskosität nach Höppler in einer 4 Gew.-%-igen Lösung von 25 mPas, und einem Hydrolysegrad von 88 Mol-%, für eine Dauer von 240 Minuten (entsprechend einer Menge von 62,8 kg) und 5,2 kg/h eines Gemisches aus 0,8 kg Vinyltrimethoxysilan und 16,3 kg Vinylacetat. Ethylen wurde bei einem Solldruck von 25 bar nachdosiert bis zu einer Gesamtethylenmenge von 35 kg. Die Initiatordosierungen wurden mit Einsetzen der Dosierungen auf 1900 g/h Ammoniumpersulfat-Lösung bzw. 3500 g/h Natriumsulfit-Lösung erhöht. Nach Ende der Dosierung des Gemisches Vinyltrimethoxysilan/Vinylacetat wurden noch 7 kg eines Gemisches aus 1,5 kg Glycidylmethacrylat und 5,5 kg Vinylacetat mit einer Rate von 10 kg/h dosiert. Nach Ende aller Monomerdosierungen wurden die Initiatorlösungen noch 60 Minuten dosiert wobei der Druck auf 22 bar abfiel (Zeitpunkt 1).

Anschließend wurde der Ansatz auf 60 °C abgekühlt und in einen Drucklosreaktor überführt und dort bei einem Druck von 700 mbar durch Zugabe von 1,5 kg tert.-Butylhydroperoxid-Lösung (10 Gew.-% in Wasser) und 2,6 kg Natriumsulfit-Lösung (4 Gew. -% in Wasser) nachpolymerisiert.

Die erhaltene Dispersion hatte einen Feststoffgehalt von 57,9 Gew.-%, eine Viskosität von 4440 mPas (Brookfield, 20, 23°C), eine Glasübergangstemperatur Tg von 8°C. Der Mittelwert der gewichtsmittleren Partikelgrößenverteilung Dw der Dispersion lag bei 480 nm (Spezifische Oberfläche: 16 m²/g) .

### Beispiel 4:

### Polyvinylalkohol-/Emulgator-stabilisierte Polymerdispersion in teilkontinuierlichem Verfahren

Das Vorgehen nach Vergleichsbeispiel 3 wurde identisch wiederholt bis zum Zeitpunkt 1. Die Dispersion enthielt zu diesem Zeitpunkt einen Gehalt an freiem Vinylacetat von ca. 2,5 Gew.-% (gemessen per Gaschromatographie), entsprechend einem Polymersationsumsatz von ca. 95 Gew.-%. Der Füllgrad des Reaktors betrug ca. 91 Vol.-%.

Ab diesem Zeitpunkt wurden folgende Dosierungen gestartet:

62,8 kg/h Vinylacetat für eine Dauer von 240 Minuten (Menge 251 kg) und 48 kg/h einer wässrigen Mischung aus 123 kg entionisiertem Wasser, 33,2 kg Emulgatorlösung 1, 4,8 kg Emulgatorlösung 2, 2,18 kg Vinylsulfonat, 28,9 kg einer 10 Gew.-%-igen wässrigen Polyvinylalkohollösung, mit einer Viskosität nach Höppler in einer 4 Gew. -%- igen Lösung von 25 mPas, und einem Hydrolysegrad von 88 Mol-%-, für eine Dauer von 240 Minuten (entsprechend einer Menge von 192 kg) und 5,2 kg/h eines Gemisches aus 0,8 kg Vinyltrimethoxysilan und 16,3 kg Vinylacetat. Nach Ende der Dosierung des Gemisches Vinyltrimethoxysilan/Vinylacetat wurden noch 7 kg eines Gemisches aus 1,5 kg Glycidylmethacrylat und 5,5 kg Vinylacetat mit einer Rate von 10 kg/h dosiert. Ethylen wurde mit einer Rate von 10 kg/h nachdosiert bis zu einer Ethylenmenge von 35 kg. Die Initiatordosierungen wurden weiterhin mit 1900 g/h Ammoniumpersulfat-Lösung bzw. 3500 g/h Natriumsulfit-Lösung dosiert.

Durch die neu einsetzenden Dosierungen stieg der Reaktordruck wieder an. Ab Erreichen eines Reaktordruckes von 35 bar wurde mit dem kontinuierlichen Produkt-Transfer in den Niederdruckreaktor begonnen. Die Transferrate wurde dabei so gewählt, dass der Druck im Druckreaktor konstant bei 35 bar gehalten werden konnte. Der Druck im Niederdruckreaktor wurde auf 700 mbar abs. eingestellt.

Nach Ende der Monomerdosierungen (Zeitpunkt 2) wurden die Initiatordosierungen noch 60 Minuten mit 1900 g/h Ammoniumpersulfat-Lösung und 3500 g/h Natriumsulfit-Lösung dosiert. Anschließend wurde der Ansatz im Druckreaktor auf 60°C abgekühlt und in den Niederdruckreaktor überführt und dort mit der bereits transferierten Dispersion vereinigt. Die Mischung wurde dann bei einem Druck von 700 mbar durch Zugabe von 3 kg text.-Butylhydroperoxid-Lösung (10 Gew. -% in Wasser) und 5,2 kg Natriumsulfit-Lösung (4 Gew.-% in Wasser) nachpolymerisiert.

Die erhaltene Dispersion hatte einen Feststoffgehalt von 60,2 Gew.-%, eine Viskosität von 4300 mPas (Brookfield, 20, 23°C), eine Glasübergangstemperatur von 5°C. Der Mittelwert der gewichtsmittleren Partikelgrößenverteilung Dw der Dispersion lag bei 640 nm (Spezifische Oberfläche: 13 m²/g).

### Beispiel 5

Das Beispiel 4 wurde identisch reproduziert um eine Aussage über die Reproduzierbarkeit zu erhalten.

### Beispiel 6

Das Beispiel 4 wurde identisch wiederholt bis zum Erreichen des Zeitpunkt 2.

Zu diesem Zeitpunkt wurden folgende Dosierungen fortgesetzt: 62,8 kg/h Vinylacetat für eine Dauer von 240 Minuten (Menge 251 kg) und 48 kg/h einer wässrigen Mischung aus 123 kg entionisiertem Wasser, 33,2 kg Emulgatorlösung 1, 4,8 kg Emulgatorlösung 2, 2,18 kg Vinylsulfonat, 28,9 kg einer 10 Gew.-%-igen wässrigen Polyvinylalkohollösung, mit einer Viskosität nach Höppler in einer 4 Gew.-%-igen Lösung von 25 mPas, und einem Hydrolysegrad von 88 Mol-%, für eine Dauer von 240 Minuten (entsprechend einer Menge von 192 kg) und 5,2 kg/h eines Gemisches aus 0,8 kg Vinyltrimethoxysilan und 16,3 kg Vinylacetat. Nach Ende der Dosierung des Gemisches Vinyltrimethoxysilan/Vinylacetat wurden noch 7 kg eines Gemisches aus 1,5 kg Glycidylmethacrylat und 5,5 kg Vinylacetat mit einer Rate von 10 kg/h dosiert.

Ethylen wurde mit einer Rate von 10 kg/h nachdosiert bis zu einer Ethylenmenge von 40 kg. Die Initiatordosierungen wurden weiterhin mit 1900 g/h Ammoniumpersulfat-Lösung bzw. 3500 g/h Natriumsulfit-Lösung dosiert.

Nach Ende der Monomerdosierungen wurden die Initiatordosierungen noch 60 Minuten mit 1900 g/h Ammoniumpersulfat-Lösung bzw. 3500 g/h Natriumsulfit-Lösung dosiert. Anschließend wurde der Ansatz auf 60°C abgekühlt und in den Niederdruckreaktor überführt und dort mit der bereits transferierten Dispersion vereinigt. Die Mischung wurde dann bei einem Druck von 700 mbar durch Zugabe von 4,5 kg tert.-Butylhydroperoxid-Lösung (10 Gew.-% in Wasser) und 7,8 kg Natriumsulfit-Lösung (4 Gew.-% in Wasser) nachpolymerisiert.

Die erhaltene Dispersion hatte einen Feststoffgehalt von 60,6 Gew. -%, eine Viskosität von 5100 mPas (Brookfzeld, 20, 23°C), eine Glasübergangstemperatur Tg von 6°C. Der Mittelwert der gewichtsmittleren Partikelgrößenverteilung Dw der Dispersion lag bei 700 nm (Spezifische Oberfläche: 12 m²/g).

### Beispiel 7

Das Beispiel 6 wurde identisch reproduziert um eine Aussage über die Reproduzierbarkeit zu erhalten.

Die Dispersionen aus Vergleichsbeispiel und den Beispielen 4,5,6 und 7 wurden bezüglich ihrer Performance in Innenfarben untersucht.

Rezepturen der silikatreichen Farbe (Farbrezeptur 1) und carbonatreichen Farbe (Farbrezeptur 2) sind in Tabelle 2 beschrieben.

**Tabelle 2:**

| Farbrezeptur 1 (FR1) | | Farbrezeptur 2 (FR2) | |
|---|---|---|---|
| Bestandteil | Gew.-Anteil | Bestandteil | Gew. - Anteil |
| Wasser | 300 | Wasser | 423 |
| Celluloseether (Tylose H 6000 YP) | 6 | Celluloseether (Tylose H 6000 YP) | 6 |
| Dispergiermittel (Dispex N 40) | 5 | Dispergiermittel (Dispex N 40) | 5 |
| Dispergiermittel (Calgon N) | 5 | Dispergiermittel (Calgon N) | 5 |
| Natriumhydroxid (10% in Wasser) | 1 | Natriumhydroxid (10% in Wasser) | 1 |
| Konservierungsmittel (Hydorol W) | 1 | Konservierungsmittel (Hydorol W) | 1 |
| Entschäumer (Agitan 260) | 4 | Entschäumer (Agitan 260) | 4 |
| Magnesiumsilikat (Talkum N) | 30 | Magnesiumsilikat (Talkum N) | 80 |
| Titandioxid-Pigment (Kronos 2300) | 250 | Titandioxid-Pigment (Kronos 2300) | 100 |
| Aluminiumsilikat gefällt (P 820) | 50 | Calciumcarbonat (Omyacarb 2 GU) | 70 |
| Aluminiumsilikat (China-Clay B) | 100 | Calciumcarbonat (Omyacarb 5 GU) | 70 |
| Calciumcarbonat gefällt (Socal P2) | 13 | Calciumcarbonat gefällt (Socal P2) | 70 |
| Dolomit (Microdol 1) | 30 | Dolomit (Microdol 1) | 50 |
| Polymerdispersion (55%) | 200 | Polymerdispersion (55%) | 110 |
| Entschäumer (Agitan 260) | 5 | Entschäumer (Agitan 260) | 5 |
| Summe alle Gew.-Teile | 1000 | Summe alle Gew.-Teile | 1000 |

### Bestimmung des Nassabriebs:

Mit beiden Rezepturen wurde die Nassabriebsbeständigkeit mittels der Vliesmethode (ISO11998) getestet. Dazu wurde die Abtragung der Beschichtung nach 200 Scheuerzyklen über den Masseverlust des Farbfilms bestimmt. Aus der Farbdichte, der gescheuerten Fläche und dem Masseverlust des Farbfilms wurde der Farbabtrag (Nassabrieb) in µm berechnet. Die Ergebnisse sind in Tabelle 3 zusammengestellt.

**Tabelle 3:**

| Beispiel | NA FR 1 [µm] | NA FR 2 [µm] |
|---|---|---|
| V3 | 18,2 | 3,7 |
| 4 | 16,6 | 4,4 |
| 5 | 18,9 | 4,2 |
| 6 | 17,9 | 3,9 |
| 7 | 19,5 | 4,3 |

Man sieht, dass das erfindungsgemäße Vorgehen vergleichbare Performance liefert wie das diskontinuierliche Standardverfahren in Batchfahrweise.

## Patentansprüche

1. Verfahren zur Herstellung von wässrigen Polymerdispersionen mittels radikalisch initiierter Emulsionspolymerisation, in wässrigem Medium, von Vinylester und Ethylen und gegebenenfalls weiteren ethylenisch ungesättigten Comonomeren, in hintereinandergeschalteten Polymerisationsreaktoren, **dadurch gekennzeichnet, dass**
in einer ersten, diskontinuierlichen Polymerisationsphase in den ersten Polymerisationsreaktor die Edukte zur Polymerisation zumindest teilweise vorgelegt werden und der Rest zudosiert wird, wobei die Polymerisation bei einem Druck p von 5 bis 120 bar abs. und einer Temperatur T von 20°C bis 120°C ausgeführt wird,
und bei einem Füllgrad des Reaktors von größer 90 Vol.-%, und einem Umsatz von mindestens 90 Gew.-% der bis dahin eingesetzten Monomere, in einer zweiten kontinuierlichen Polymerisationsphase, dem ersten Polymerisationsreaktor die Edukte kontinuierlich zugeführt und kontinuierlich Produkt entnommen wird und das Produkt kontinuierlich in einen zweiten Polymerisationsreaktor überführt wird, wobei ab diesem Zeitpunkt Zudosierung von Edukt und Entnahme von Produkt im ersten Polymerisationsreaktor so gesteuert werden, dass diese Mengen einander entsprechen und im zweiten Polymerisationsreaktor die Polymerisation bei einem Druck p von < 5 bar abs. bis zu einem Umsatz von mindestens 98 Gew.-% der eingesetzten Monomere, bezogen auf das Gesamtgewicht der im Verfahren eingesetzten Monomermenge, weitergeführt wird.

2. Verfahren nach Anspruch 1, **dadurch gekennzeichnet, dass** die zweite kontinuierliche Polymerisationsphase dann eingeleitet wird, wenn sich im ersten Polymerisationsreaktor ein Druck p einstellt, der 5 bis 50 bar über dem Sättigungsdruck von Ethylen im vorliegenden Reaktionsgemisch liegt.

3. Verfahren nach Anspruch 1 oder 2, **dadurch gekennzeichnet, dass** die Emulsionspolymerisation in einer Kaskade aus einem ersten Druckreaktor und anschließend mindestens einem zweiten Niederdruckreaktor durchgeführt wird.

4. Verfahren nach Anspruch 1 bis 3, **dadurch gekennzeichnet, dass** in der ersten, diskontinuierlichen Polymerisationsphase die Vinylester-Monomere, Ethylen sowie gegebenenfalls weitere Comonomere und/oder Hilfsmonomere, zu mindestens 50 Gew.-% im Druckreaktor vorgelegt werden, bezogen auf das Gesamtgewicht an Monomer, welches in der diskontinuierlichen Phase zugegeben wird,
und der Anteil an Schutzkolloid und/oder Emulgator, welcher in der ersten, diskontinuierlichen Polymerisationsphase eingesetzt wird, zu 60 bis 100 Gew. -% vorgelegt wird.

5. Verfahren nach Anspruch 1 bis 4, **dadurch gekennzeichnet, dass** während der Phase der kontinuierlichen Polymerisation der Umsatz zu keinem Zeitpunkt unter 92 Gew.-% fällt, bezogen auf die Gesamtmenge der bis dahin zudosierten Monomere.

6. Verfahren nach Anspruch 1 bis 5, **dadurch gekennzeichnet, dass** die kontinuierliche Polymerisationsphase mindestens solange durchgeführt bis die dabei zugeführte Gewichtsmenge an Edukten mindestens der Gewichtsmenge an Edukten entspricht, welche während der ersten diskontinuierlichen Polymerisationsphase zugegeben worden ist.

7. Verfahren nach Anspruch 1 bis 6, **dadurch gekennzeichnet, dass** der Umfang der kontinuierlichen Polymerisationsphase 100 bis 400 Gew.-% der Ansatzgröße der diskontinuierlichen Polymerisationsphase entspricht.

8. Verfahren nach Anspruch 1 bis 7, **dadurch gekennzeichnet, dass** die kontinuierliche Polymerisationsphase so betrieben wird, dass im gleichen Zeitraum wie in der diskontinuierlichen Polymerisationphase mindestens die gleiche Menge Polymerisationsprodukt gebildet wird wie in der diskontinuierlichen Polymerisationsphase.

9. Verfahren nach Anspruch 1 bis 8, **dadurch gekennzeichnet,**
**dass** das, im Niederdruckreaktor erhaltene Produkt, einen Restmonomorgehalt von < 1000 ppm hat.

10. Verfahren nach Anspruch 1 bis 9, **dadurch gekennzeichnet, dass** der Druck während der kontinuierlichen Polymerisations-phase im ersten Polymerisationsreaktor 5 bis 20 bar über dem Sättigungsdruck von Ethylen im vorliegenden Reaktionsgemisch liegt.

11. Verfahren nach Anspruch 1 bis 10, **dadurch gekennzeichnet, dass** die dabei erhaltene wässrige Polymerdispersion mittels Trocknung zu einem in Wasser redispergierbaren Polymerpulver weiterverarbeitet wird.

## Claims

1. Process for preparing aqueous polymer dispersions by means of radically initiated emulsion polymerization, in aqueous medium, of vinyl ester and ethylene and optionally further ethylenically unsaturated comonomers, in polymerization reactors in series, **characterized in that**
in a first, discontinuous polymerization phase, the reactants for the polymerization are included at least in part in an initial charge to the first polymerization reactor and the remainder is metered in, the polymerization being performed under a pressure p of 5 to 120 bar abs. and at a temperature T of 20°C to 120°C,
and with a degree of reactor filling of greater than 90% by volume and at a conversion of at least 90% by weight of the monomers used up until that point, in a second, continuous polymerization phase, the reactants are supplied continuously to the first polymerization reactor and product is withdrawn continuously from the first polymerization reactor, and the product is transferred continuously into a second polymerization reactor, and from this time point on, metering of reactant and withdrawal of product in the first polymerization reactor are controlled such that these amounts correspond to one another, and in the second polymerization reactor the polymerization is continued under a pressure p of < 5 bar abs. through to a conversion of at least 98% by weight of the monomers used, based on the total weight of the amount of monomer used in the process.

2. Process according to Claim 1, **characterized in that** the second, continuous polymerization phase is initiated when a pressure p established in the first polymerization reactor is 5 to 50 bar above the saturation pressure of ethylene in the reaction mixture present.

3. Process according to Claim 1 or 2, **characterized in that** the emulsion polymerization is carried out in a cascade of a first pressure reactor and subsequently at least one second low-pressure reactor.

4. Process according to Claim 1 to 3, **characterized in that** in the first, discontinuous polymerization phase, the vinyl ester monomers, ethylene, and optionally further comonomers and/or auxiliary monomers are included to an extent of at least 50% by weight in an initial charge to the pressure reactor, based on the total weight of monomer added in the discontinuous phase,
and the fraction of protective colloid and/or emulsifier used in the first, discontinuous polymerization phase is included to an extent of 60% to 100% by weight in the initial charge.

5. Process according to Claim 1 to 4, **characterized in that** at no time point during the phase of continuous polymerization does the conversion fall below 92% by weight, based on the total amount of the monomers metered in up to that point.

6. Process according to Claim 1 to 5, **characterized in that** the continuous polymerization phase is carried out at least until the amount by weight of reactants supplied in this phase corresponds at least to the amount by weight of reactants added during the first, discontinuous polymerization phase.

7. Process according to Claim 1 to 6, **characterized in that** the extent of the continuous polymerization phase corresponds to 100% to 400% by weight of the batch size of the discontinuous polymerization phase.

8. Process according to Claim 1 to 7, **characterized in that** the continuous polymerization phase is operated such that in the same time period as in the discontinuous polymerization phase, at least the same amount of polymerization product is formed as in the discontinuous polymerization phase.

9. Process according to Claim 1 to 8, **characterized in that** the product obtained in the low-pressure reactor has a residual monomer content of < 1000 ppm.

10. Process according to Claim 1 to 9, **characterized in that** the pressure during the continuous polymerization phase in the first polymerization reactor is 5 to 20 bar above the saturation pressure of ethylene in the reaction mixture present.

11. Process according to Claim 1 to 10, **characterized in that** the aqueous polymer dispersion obtained in this process is further processed by drying to form a water-redispersible polymer powder.

## Revendications

1. Procédé pour la préparation de dispersions aqueuses de polymères par une polymérisation en émulsion initiée par voie radicalaire, dans un milieu aqueux, d'ester de vinyle et d'éthylène et le cas échéant d'autres comonomères éthyléniquement insaturés, dans des réacteurs de polymérisation disposés les uns derrière les autres, **caractérisé en ce que** les produits de départ pour la polymérisation sont au moins partiellement disposés au préalable dans une première phase de polymérisation discontinue dans le premier réacteur de polymérisation et le reste est ajouté en dosant, la polymérisation étant réalisée à une pression p de 5 à 120 bars abs. et à une température T de 20°C à 120°C, et à un degré de remplissage du réacteur supérieur à 90% en volume et à une conversion d'au moins 90% en poids des monomères utilisés jusque là, dans une deuxième phase continue de polymérisation, les produits de départ sont introduits en continu dans le premier réacteur de polymérisation et du produit est prélevé en continu du premier réacteur de polymérisation et le produit est transféré en continu dans un deuxième réacteur de polymérisation, en régulant à partir de ce moment le dosage du produit de départ et le prélèvement du produit dans le premier réacteur de polymérisation de manière telle que ces quantités correspondent et la polymérisation est continuée dans le deuxième réacteur de polymérisation à une pression p < 5 bars abs. jusqu'à une conversion d'au moins 98% en poids des monomères utilisés, par rapport au poids total de la quantité de monomères utilisée dans le procédé.

2. Procédé selon la revendication 1, **caractérisé en ce que** la deuxième phase de polymérisation continue est démarrée lorsqu'il se règle, dans le premier réacteur de polymérisation, une pression p qui se situe 5 à 50 bars au-dessus de la pression de saturation d'éthylène dans le mélange réactionnel qui existe.

3. Procédé selon la revendication 1 ou 2, **caractérisé en ce que** la polymérisation en émulsion est réalisée dans une cascade constituée par un premier réacteur sous pression et ensuite au moins un deuxième réacteur basse pression.

4. Procédé selon les revendications 1 à 3, **caractérisé en ce qu'**on dispose au préalable, dans la première phase de polymérisation discontinue, les monomères d'ester de vinyle, l'éthylène ainsi que le cas échéant d'autres comonomères et/ou monomères auxiliaires, à raison d'au moins 50% en poids dans le réacteur sous pression, par rapport au poids total de monomères, qui est ajouté dans la phase discontinue, et la proportion de colloïde de protection et/ou d'émulsifiant, qui est utilisée dans la première phase de polymérisation discontinue, est disposée au préalable à raison de 60 à 100% en poids.

5. Procédé selon les revendications 1 à 4, **caractérisé en ce que** pendant la phase de la polymérisation continue, la conversion ne retombe à aucun moment sous 92% en poids, par rapport à la quantité totale des monomères ajoutés en dosant jusque là.

6. Procédé selon les revendications 1 à 5, **caractérisé en ce que** la phase de polymérisation continue est réalisée au moins jusqu'à ce que la quantité pondérale alimentée de produits de départ corresponde au moins à la quantité pondérale des produits de départ qui a été ajoutée pendant la première phase de polymérisation discontinue.

7. Procédé selon les revendications 1 à 6, **caractérisé en ce que** l'étendue de la phase de polymérisation continue correspond à 100 jusqu'à 400% en poids de la taille de la charge de la phase de polymérisation discontinue.

8. Procédé selon les revendications 1 à 7, **caractérisé en ce que** la phase de polymérisation continue est exploitée de manière telle qu'il se forme, pendant le même laps de temps que dans la phase de polymérisation discontinue, au moins la même quantité de produit de polymérisation que dans la phase de polymérisation discontinue.

9. Procédé selon les revendications 1 à 8, **caractérisé en ce que** le produit obtenu dans le réacteur basse pression présente une teneur en monomères résiduels < 1000 ppm.

10. Procédé selon les revendications 1 à 9, **caractérisé en ce que** la pression pendant la phase de polymérisation continue dans le premier réacteur de polymérisation est supérieure de 5 à 20 bars à la pression de saturation d'éthylène dans le mélange réactionnel présent.

11. Procédé selon les revendications 1 à 10, **caractérisé en ce que** la dispersion aqueuse de polymères obtenue est transformée par séchage en une poudre de polymère redispersible dans l'eau.
